(19)

Europäisches
Patentamt

European
Patent Office

Office européen
des brevets

(11) **EP 3 846 051 A1**

(12) **EUROPEAN PATENT APPLICATION**
published in accordance with Art. 153(4) EPC

(43) Date of publication:
**07.07.2021  Bulletin 2021/27**

(21) Application number: **18932074.0**

(22) Date of filing: **21.12.2018**

(51) Int Cl.:
**G06F 21/32** (2013.01)

(86) International application number:
**PCT/CN2018/122621**

(87) International publication number:
**WO 2020/042462 (05.03.2020 Gazette 2020/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(30) Priority: **31.08.2018  CN 201811023997**

(71) Applicant: **One Connect Smart Technology Co.,
Ltd. (Shenzhen)
Shenzhen, Guangdong 518000 (CN)**

(72) Inventor: **YU, Longlong
Shenzhen, Guangdong 518000 (CN)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **PHYSIOLOGICAL CHARACTERISTIC INFORMATION-BASED IDENTITY AUTHENTICATION
METHOD, DEVICE, SYSTEM AND MEDIUM**

(57)     The present application discloses a method for verifying identity based on physiological feature information, which includes the following steps of: receiving an operating instruction triggered by a user, and collecting the physiological feature information of the user through a preset physiological feature device; generating an identity verification request containing the physiological feature information, and sending the identity verification request to a server, so that the server feeds back the identity verification information; receiving the identity verification information sent by the server, and acquiring historical verification device information in the identity verification information; comparing the historical verification device information with device identification information of the terminal; if the historical verification device information matches the device identification information, passing through identity verification and executing the operating instruction. The present application also discloses a device, a system for verifying identity based on physiological feature information, and a medium. The present application aims to improve the accuracy of biological validation.

```
┌──────────────────────────────────────────────────┐
│ receiving an operating instruction triggered by a │──S10
│ user, and collecting the physiological feature    │
│ information of the user through a preset           │
│ physiological feature device                      │
└──────────────────────────────────────────────────┘
                      │
┌──────────────────────────────────────────────────┐
│ generating an identity verification request       │──S20
│ containing the physiological feature information,  │
│ and sending the identity verification request to  │
│ a server, so that the server feeds back the       │
│ identity verification information                 │
└──────────────────────────────────────────────────┘
                      │
┌──────────────────────────────────────────────────┐
│ receiving the identity verification information    │──S30
│ sent by the server, and acquiring historical      │
│ verification device information in the identity    │
│ verification information                          │
└──────────────────────────────────────────────────┘
                      │
┌──────────────────────────────────────────────────┐
│ comparing the historical verification device      │──S40
│ information with device identification information │
│ of the terminal                                   │
└──────────────────────────────────────────────────┘
                      │
┌──────────────────────────────────────────────────┐
│ if the historical verification device information  │──S50
│ matches the device identification information,     │
│ passing through identity verification and         │
│ executing the operating instruction               │
└──────────────────────────────────────────────────┘
```

FIG. 2

EP 3 846 051 A1

**Description**

The present application claims the priority of the Chinese patent application filed with the Chinese Patent Office on August 31, 2018 with the application No. 201811023997.7, and entitled "a method, a device, and a system for verifying identity based on physiological feature information, and a medium ", the whole content of which is incorporated in the present application by reference.

TECHNICAL FIELD

The present application relates to the field of data processing, and in particular to a method, a device, and a system for verifying identity based on physiological feature information, and a medium.

BACKGROUND

With the rapid development of science and technology, there are more and more methods to unlock a mobile phone, and biometric verification has gradually become a mainstream method for unlocking a mobile phone and verifying an identity.
Compared with traditional identity verification methods, the biometric verification is provided with better security and is more convenient. The biometric verification mainly includes two types, i.e. a contact type and a non-contact type. Among them, the contact-type biometric verification includes fingerprint verification, palmprint verification, etc., and the non-contact biometric verification includes methods such as facial verification, voiceprint verification, iris verification and the like. However, a single biological feature is unstable, for example, the sound will affect voiceprint features with changes in volume, speed, and sound quality (such as when a person catches a cold). In a case of similar facial structures (such as twins), the facial verification under the current state of the art basically fails; and the occlusion of an external shelter, such as glasses, beards, hair, etc., may cause a change in the facial features. How to improve the accuracy of the biological verification has currently become a technical problem to be solved urgently.

SUMMARY

A main purpose of the present application is to provide a method, a device, and a system for verifying identity based on physiological feature information, and a medium, which are aimed at improving the accuracy of identity verification based on biometric feature data.
In order to achieve the above purpose, the present application provides a method for verifying identity based on physiological feature information. The method for verifying identity based on the physiological feature information is applied to a terminal;
the method for verifying identity based on the physiological feature information includes the following steps of:

> receiving an operating instruction triggered by a user, and collecting the physiological feature information of the user through a preset physiological feature device;
> generating an identity verification request containing the physiological feature information, and sending the identity verification request to a server, so that the server feeds back the identity verification information;
> receiving the identity verification information sent by the server, and acquiring historical verification device information in the identity verification information;
> comparing the historical verification device information with device identification information of the terminal;
> if the historical verification device information matches the device identification information, passing through identity verification and executing the operating instruction.

Additionally, in order to achieve the above purpose, the present application also provides a method for verifying identity based on physiological feature information and applied to a server;
the method for verifying identity based on the physiological feature information includes the following steps of:

> receiving an identity verification request sent by a terminal, and acquiring the physiological feature information in the identity verification request;
> acquiring historical login device information corresponding to the physiological feature information, and processing the historical login device information according to a preset encryption rule to generate the identity verification information;
> sending the identity verification information to the terminal, so that the terminal performs identity verification according to the identity verification information.

Additionally, in order to achieve the above purpose, the present application also provides a system for verifying identity based on physiological feature information. The system for verifying identity based on the physiological feature information includes a terminal and a server in communication connection with each other;
the terminal includes a first memory, a first processor, and a computer-readable instruction stored in the first memory and executable in the first processor, among which,
the first processor is configured to:

> receive an operating instruction triggered by a user, and collect the physiological feature information of the user through a preset physiological feature device;

generate an identity verification request containing the physiological feature information, and send the identity verification request to the server, so that the server feeds back the identity verification information;

receive the identity verification information sent by the server, and acquire historical verification device information in the identity verification information;

the first processor is further configured to:

compare the historical verification device information with device identification information of the terminal;
if the historical verification device information matches the device identification information, pass through identity verification and execute the operating instruction;

the server includes a second memory, a second processor, and a computer-readable instruction stored in the second memory and executable in the second processor, among which,
the second processor is configured to:

receive the identity verification request sent by the terminal, and acquire the physiological feature information in the identity verification request;
acquire historical login device information corresponding to the physiological feature information, and process the historical login device information according to a preset encryption rule to generate the identity verification information;
send the identity verification information to the terminal, so that the terminal performs the identity verification according to the identity verification information.

Additionally, in order to achieve the above purpose, the present application also provides a device for verifying identity based on physiological feature information, and the device for verifying identity based on the physiological feature information is arranged in a terminal;
the device for verifying identity based on the physiological feature information includes:

a receiving and collecting module, configured to receive an operating instruction triggered by a user, and collect the physiological feature information of the user through a preset physiological feature device;
a generating and sending module, configured to generate an identity verification request containing the physiological feature information, and send the identity verification request to a server, so that the server feeds back the identity verification information;
a receiving and acquiring module, configured to receive the identity verification information sent by the server, and acquire historical verification device information in the identity verification information;
an information comparison module, configured to compare the historical verification device information with device identification information of the terminal;
a verification execution module, configured to, if the historical verification device information matches the device identification information, pass through identity verification and execute the operating instruction.

Additionally, in order to achieve the above purpose, the present application also provides a device for verifying identity based on physiological feature information, and the device for verifying identity based on the physiological feature information is arranged in a server;
the device for verifying identity based on the physiological feature information includes:

a receiving module, configured to receive an identity verification request sent by a terminal, and acquire the physiological feature information in the identity verification request;
an acquisition module, configured to acquire historical login device information corresponding to the physiological feature information, and process the historical login device information according to a preset encryption rule to generate the identity verification information;
a sending module, configured to send the identity verification information to the terminal, so that the terminal performs identity verification according to the identity verification information.

Additionally, in order to achieve the above purpose, the present application also provides a computer storage medium;
a computer-readable instruction is stored in the computer storage medium, and the computer-readable instruction, when executed by a processor, implements the steps of the above identity verification methods based on the physiological feature information.
Regarding the method, the device, and the system for verifying identity based on the physiological feature information, and the medium proposed by the embodiments of the present application, the present application avoids direct comparing and verifying the physiological feature information in the traditional methods through: receiving, by a terminal, an operating instruction triggered by a user, and collecting the physiological feature information of the user through a preset physiological feature device; generating an identity verification request containing the physiological feature information, and sending the identity verification request to a server, so that the server feeds back the identity verification information; receiving the identity verification information sent by the server, and acquiring historical verification device information in the identity verification information; comparing the historical verification device information with device identification information of the terminal; if the historical verification device information matches the device identification information, passing through identity verification and executing the operating instruction. That is, instead of comparing predicted information in a local storage of the terminal with the collected biological feature information, the terminal sends the collected biological feature information to the server, and then the server returns the identity verification information for comparison, which avoids interference existed in direct comparison and verification and improves the accuracy of the comparison and verification.

DESCRIPTION OF THE DRAWINGS

FIG. 1 is a structure diagram of a device of a hardware operating environment involved in a solution of an embodiment of the present application.
FIG. 2 is a schematic flowchart of a first embodiment of a method for verifying identity based on physiological feature information according to the present application.
FIG. 3 is a schematic flowchart of a second embodiment of a method for verifying identity based on physiological feature information according to the present application.
FIG. 4 is a schematic diagram of functional modules of a device for verifying identity based on physiological feature information according to an embodiment of the present application.
FIG. 5 is a schematic diagram of functional modules of a device for verifying identity based on physiological feature information according to another embodiment of the present application.

The realization of the purpose, the functional characteristics, and the advantages of the present application will be further described in conjunction with the embodiments and with reference to the accompanying drawings.

DETAILED EMBODIMENTS

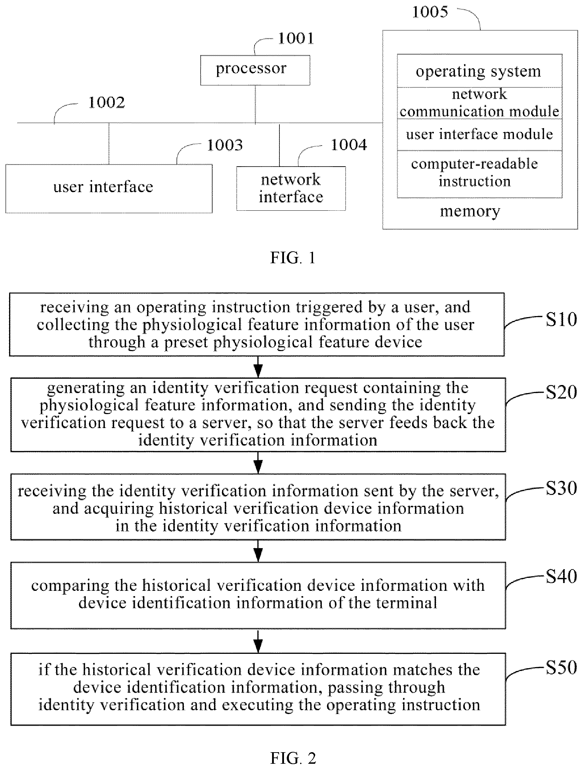

It should be understood that the specific embodiments described herein are only used to explain the present application, and not to limit the present application.
As shown in FIG. 1, FIG. 1 is a structure diagram of a terminal (also called a device for verifying identity based on physiological feature information, the device for verifying identity based on physiological feature information may be formed by a separate identity verification device based on physiological feature information or a combination of other devices and a separate identity verification device based on physiological feature information) of a hardware operating environment involved in a solution of an embodiment of the present application.
The terminal in an embodiment of the present application may be a fixed terminal or a mobile terminal, such as a terminal device with a display function, like an "IoT (Internet of Things) device", a smart air conditioner with networking functions, a PC (personal computer), a smart phone, a portable computer etc.
As shown in FIG. 1, the terminal may include: a processor 1001, such as a central processing unit (CPU), a network interface 1004, a user interface 1003, a memory 1005, and a communication bus 1002. Among them, the communication bus 1002 is configured to implement connection and communication between these components. The user interface 1003 may include a display screen and an input unit such as a keyboard, and the optional user interface 1003 may further include a standard wired interface and a standard wireless interface. The network interface 1004 may optionally include a standard wired interface and a standard wireless interface (such as Wireless-Fidelity (WIFI) interface). The memory 1005 may be a high-speed RAM memory, or a stable memory (non-volatile memory), such as a magnetic disk memory. Optionally, the memory 1005 may also be a storage device independent of the aforementioned processor 1001.
Optionally, the terminal may further include a camera, an RF (Radio Frequency) circuit, a sensor, an audio circuit, and a WiFi module; an input unit, a display screen, and a touch screen; the network interface may be selected from Bluetooth, Probes and so on in addition to WiFi in the wireless interface. Among them, the sensor is, for example, a light sensor, a motion sensor and other sensors. Specifically, the light sensor may include an ambient light sensor and a proximity sensor; of course, the mobile terminal may further be equipped with other sensors such as a gyroscope, a barometer, a hygrometer, a thermometer, an infrared sensor, etc., which will not be repeated herein.
Those skilled in the art could understand that the terminal structure as shown in FIG. 1 does not constitute a limitation on the terminal, and may include more or fewer components than as shown in the figure, or combine some components, or arrange different components.
As shown in FIG. 1, the computer software product is stored in a storage medium (storage medium: also called computer storage medium, computer medium, readable medium, readable storage medium, computer-readable storage medium, or directly called medium, etc., which may be a non-volatile readable storage medium, such as a RAM, a magnetic disk, or an optical disk), and includes several instructions configured to enable a terminal device (which can be a mobile phone, computer, server, air conditioner, or network device, etc.) to execute the method in each of the embodiments of the present application. The memory 1005 as a computer storage medium may include an operating system, a network communication module, a user interface module, and a computer-readable instruction.

In the terminal as shown in FIG. 1, the network interface 1004 is mainly configured to connect to a back-end server and communicate with the back-end server; the user interface 1003 is mainly configured to connect to a client terminal (user terminal) and communicate with the client terminal; and the processor 1001 may be configured to call the computer-readable instruction stored in the memory 1005, and execute the steps of the methods for verifying identity based on the physiological feature information provided by the following embodiments of the present application.

Referring to FIG. 2, in a first embodiment of the method for verifying identity based on physiological feature information of the present application, the method for verifying identity based on physiological feature information is applied to the terminal, and the method for verifying identity based on physiological feature information includes the following.

At step S10, receive an operating instruction triggered by a user, and collect physiological feature information of the user through a preset physiological feature device.

The user triggers the corresponding operating instruction at the terminal, the terminal receives the operating instruction, and the terminal compares the operating instruction with the operating instruction in a preset operating instruction set (the preset operating instruction set is a set of authorized operating instructions set in advance) to determine whether the operating instruction is included in the preset operating instruction set. If the operating instruction is not included in the preset operating instruction set, the operating instruction is executed directly; if the operating instruction is included in the preset operating instruction set, the operating instruction is required to be authorized by the user. The terminal starts up the preset physiological feature device and collects the user's physiological feature information through the preset physiological feature device (the preset physiological feature device refers to a device preset in the terminal for collecting the user's physiological feature information, for example, a camera device is configured to collect a facial image of the user, a microphone device is configured to collect voice information of the user, a fingerprint collection device is configured to collect the fingerprint information of the user, and the like), so as to perform identity verification and authorization based on the collected physiological feature data. Among them, the physiological feature information includes: fingerprint information, palmprint information, a face image, sound information, iris, etc.

At step S20, generate an identity verification request including the physiological feature information, and send the identity verification request to a server, so that the server feeds back identity verification information.

When the terminal receives the physiological feature information collected by the preset physiological feature device, the terminal generates the identity verification request containing the physiological feature information, and sends the identity verification request to the server. When the server receives the identity verification request, the server acquires the physiological feature information in the identity verification request and processes it to generate corresponding identity verification information.

Here, the identity verification information generated by the server is that: the server acquires the physiological feature information in the identity verification request by parsing the identity verification request, and the server compares the acquired physiological feature information with each identified physiological feature information pre-stored in the server (the identified physiological feature information refers to preset physiological feature information, the preset physiological feature information is associated with the terminal information and saved, for example, in a historical operation record, the user uses a fingerprint to unlock a terminal numbered 001, and the user's fingerprint is bound with the terminal numbered 0001, and the terminal numbered 001 is used as historical device information corresponding to the electrical fingerprint) to acquire a target physiological feature information that matches the physiological feature information in the identity verification request, and the server acquires the historical device information associated with the target physiological feature information. Here, the historical device information refers to identification information of the user's historical operating device, and the server generates the identity verification information based on the historical device information and sends it to the terminal.

In this embodiment, when the terminal performs identity verification, the collected physiological feature information is not directly compared with the pre-stored physiological feature information in the terminal's local storage, but is sent to the server for identity verification, which improves the accuracy of identity verification.

At step S30, receive the identity verification information sent by the server, and acquire historical verification device information in the identity verification information.

The terminal receives the identity verification information sent by the server, and acquires the historical verification device information in the identity verification information. The terminal compares the historical verification device information with a device identification of the terminal itself to determine whether the user is the owner of the terminal.

It should be noted that, in this embodiment, the server may encrypt the identity verification information, and the terminal receives the encrypted identity verification information and decrypts it to acquire the historical device information in the identity verification information, specifically:

at step a1, receive the identity verification information sent by the server, and determine whether the identity verification information is encrypted;

at step b1, if the identity verification information has been encrypted, the identity verification information is processed according to a preset decryption rule, and the historical verification device information in the identity verification information is acquired.

In this embodiment, the identity verification information sent by the server is received, and it is determined whether the identity verification information is encrypted; if the identity verification information has been encrypted, the terminal processes the identity verification information according to the preset decryption rule, and the historical verification device information in the identity verification information is acquired. Here, the preset decryption rule refers to an encryption and decryption rule preset by the server and the terminal.

At step S40, compare the historical verification device information with the device identification information of the terminal.

The terminal compares the historical verification device in the identity verification information with the device identification information of the terminal itself. In this embodiment, the terminal compares the historical device information with the device identification information of the terminal, and determines an identity verification result according to the comparison result. If the historical verification device information does not match the device identification information, that is, the historical terminal used by the user is different from the current terminal (or the historical user using the terminal is different from the user currently using the terminal), the terminal determines the current user is not the owner, and the terminal does not respond to the operating instruction.

At step S50, if the historical verification device information matches the device identification information, the identity verification is passed and the operating instruction is executed.

If the historical verification device information matches the device identification information, that is, the historical terminal used by the user is the same with the current terminal (or the historical user using the terminal is the same with the user currently using the terminal), then the terminal determines that the electric identity verification is passed and executes the operating instruction.

In this embodiment, when the terminal performs identity verification, the information of the device used by the user historically is compared with the information of the device used by the user currently by virtue of the server to complete the user's identity verification, thereby making the user's identity verification result more accurate.

On the basis of the first embodiment of the present application, this embodiment of the method for verifying identity based on physiological feature information of the present application is further proposed, and this embodiment is a refinement of the step S20 in the first embodiment.

The comparison based on the physiological feature information will be affected by the collected physiological feature information. For example, when voice collection is performed, noise is collected, and the noise will affect voice recognition for the user. Alternatively, in the case of twins, identical twins will cause interference to facial recognition. This embodiment is mainly aims to explain in detail how to perform identity verification more accurately in the presence of interference.

In this embodiment, the identity verification using a face image is taken as an example for description, and the method for verifying identity based on the physiological feature information includes the following.

At step S21, input a face image to a preset image recognizer, and acquire face recognition data corresponding to the face image.

The terminal inputs the collected face image to the preset image recognizer, where the preset image recognizer refers to a preset trained model for facial image recognition. The preset image recognizer may optionally include an Adaboost iterative algorithm classifier and a SVM (Support Vector Machine) classifier; the face image is recognized by the preset image recognizer to obtain the face recognition data corresponding to the face image.

That is, the terminal draws a unique facial spectrum by projecting more than 30,000 invisible light points on the face of the person to be collected. The terminal may determine data information about blinking or mouth opening of the user through facial motion feature data, and the terminal input the collected face image into the preset image recognizer, and the preset image recognizer may recognize and acquire the face recognition data (the face recognition data refers to data of feature information about the HEENT (Head, Eyes, Ears, Nose, Throat) of a human face and a facial expression, such as data related with motion such as blinking and pouting etc.).

At step S22, input the face recognition data into a preset comparison model, and determine whether there is target feature data matching the face recognition data in a preset image database.

The preset comparison model is:

$$d_{12} = \sqrt{\sum_{k=1}^{n}(x_{1k} - x_{2k})^2},$$

where $d_{12}$ refers to an Euclidean distance between the face recognition data and the pre-stored feature data, the face recognition data corresponds to an n-dimensional vector $\mathbf{a}(x_{11}, x_{12}, ..., x_{in})$, $x_{1k}$ refers to one value in the n-dimensional vector $\mathbf{a}$, and the pre-stored feature data in the preset image database corresponds to n-dimensional vectors $\mathbf{b1}(x_{21}, x_{22}, ..., x_{2n})$, $\mathbf{b2}(x_{2i}, x_{22}, ..., x_{2n})$, ..., $\mathbf{bn}(x_{21}, x_{22}, ..., x_{2n})$, and $x_{2k}$ refers to one value of any one of the n-dimensional vectors $\mathbf{b1}$, $\mathbf{b2}$, ..., $\mathbf{bn}$.

The terminal compares the face recognition data with each pre-stored feature data in the preset image database stored locally (here the preset image database refers to a preset image database preset in the terminal for storing the physiological feature information preset by the user), that is, the terminal compares the face recognition data with each pre-stored feature data in the preset image database to perform initial verification of the face image.

The face recognition data in this embodiment corresponds to matrix data, that is, the preset image recognizer processes the face image, and processes positions and pixel features of points in the face image to form matrix data. For example, pixel data of a grayscale image is a matrix, rows of the matrix correspond to the height of the image (in pixels), columns of the matrix correspond to the width of the image (in pixels), elements of the matrix correspond to the pixels of the image, and values of the elements of the matrix are gray values of the pixels.

The terminal inputs the n-dimensional vector $a(x_{11}, x_{12},..., x_{1n})$ corresponding to the face recognition data into the preset comparison model. The preset comparison model refers to:

$$d_{12} = \sqrt{\sum_{k=1}^{n}(x_{1k} - x_{2k})^2},$$

and the preset comparison model calculates corresponding Euclidean distances between $a(x_{11}, x_{12},..., x_{1n})$ and $b1(x_{21}, x_{22}, ..., x_{2n})$, $b2(x_{21}, x_{22}, ..., x_{2n})$, ..., $bn(x_{21}, x_{22}, ..., x_{2n})$, respectively. For example, the Euclidean distance between $a(x_{11}, x_{12},..., x_{1n})$ and $b1(x_{21}, x_{22}, ..., x_{2n})$ is 2.3; the Euclidean distance between $a(x_{11}, x_{12},..., x_{1n})$ and $b2(x_{21}, x_{22}, ..., x_{2n})$ is 16.5; the Euclidean distance between $a(x_{11}, x_{12},..., x_{1n})$ and $b3(x_{31}, x_{32}, ..., x_{3n})$ is 7.5, and the like, until the Euclidean distance between $a(x_{11}, x_{12},..., x_{1n})$ and $bn(x_{21}, x_{22}, ..., x_{2n})$ is 8.8. The Euclidean distance is used to measure similarity between the face recognition data and each of the pre-stored feature data in the preset image database.

The terminal acquires the minimum Euclidean distance, and determines whether the minimum Euclidean distance is less than a preset value (the preset value is set according to a specific situation). If the minimum Euclidean distance is less than the preset value, there is the target feature data matching the face recognition data in the preset image database, and vice versa.

If there is no target feature data that matches the face recognition data in the preset image database, the initial identity verification fails, and the terminal re-collects information. If there is the target feature data that matches the face recognition data in the preset image database, the initial identity verification succeeds.

At step S23, if there is the target feature data matching the face recognition data in the preset image database, the initial identity verification succeeds, and an identity verification request containing the face recognition data is generated.

If there is the target feature data matching the face recognition data in the preset image database, the initial identity verification succeeds, that is, after the initial identity verification of the terminal is passed through, the terminal generates the identity verification request including the face recognition data, and the request is sent to the server to be processed by the server, so as to return the identity verification information. The terminal performs secondary verification according to the identity verification information returned by the server.

A t step S24, send the identity verification request to the server, so that the server feeds back the identity verification information.

The terminal sends the identity verification request to the server, so that the server feeds back the identity verification information. Regarding the specific implementation of the server feeding back the identity verification information based on the identity verification request, reference may be made to the first embodiment, which will not be repeated in this embodiment.

In this embodiment, the terminal inputs the face image into the preset image recognizer to acquire the face recognition data corresponding to the face image. The terminal performs the initial comparison according to the face recognition data in the recognition data, and after the initial comparison succeeds, the terminal then generates corresponding identity verification information of the face recognition data in the recognition data and sends the identity verification information to the server, so that the server performs verification based on motion recognition data. In this embodiment, a large amount of data is used for comparison to improve the accuracy of data recognition.

For example, there are twins, the first person and the second person; the first person is the owner of terminal A, and the terminal A is configured to pay once the facial expression of pouting is detected. When the second person uses the terminal A to pay, the terminal A collects the second person's face image and recognizes it to acquire recognition data, the terminal A compares the recognized face recognition data, and the initial verification is passed through, then the terminal A generates an identity verification request based on the second person's face recognition data and sends it to the server, the server receives the identity verification request and acquires the face recognition data in the identity verification request, and the server determines that the face recognition data is 95% similar to the recognized face feature data of the first person; if the face recognition data is 98% similar to the recognized face feature data of the second person, then the server determines the face recognition data is for the second person, and the server acquires historical device information associated with the second person as the terminal B, the server uses the terminal B as the historical device information, and generates identity verification information containing the historical device information, and sends the identity verification information to the terminal A, and the terminal A compares the historical device information with its own device information, and concludes that the identity verification fails.

This implementation is described by taking face image recognition as an example. For voice information, those skilled in the art may also make corresponding extensions. In addition, this application also provides another implementation method for identity verification based on a face image. For example, the terminal performs initial comparison verification based on face recognition, and motion feature data of the terminal is compared with standard data in the preset database after the initial identity verification succeeds. If the facial motion feature data matches with the standard data in the preset database, the secondary identity verification is passed through and the user's operating instruction is executed. That is, the user may in advance customize that the data corresponding to the state of mouth opening is configured as the standard data of the identity verification for payment authorization in the terminal, the data corresponding to the state of blinking is configured as the standard data of the identity verification for login authorization, and the data corresponding to the state of the pouting is configured as the standard data of the identity verification for terminal screen unlocking. The terminal acquires the data corresponding to the user-defined state, and uses the data corresponding to the user-defined state as the standard data. The terminal compares the facial motion feature data with the standard data in the preset database, that is, the terminal determines that the motion feature data corresponding to the user's facial image matches the predefined motion feature data, then the secondary identity verification succeeds, and the user's operating instruction is executed.

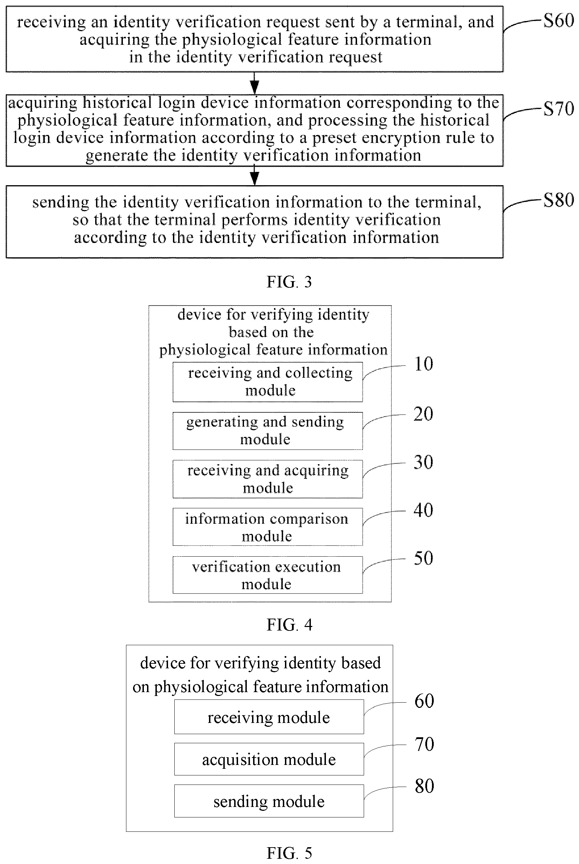

Further, referring to FIG. 3, in the second embodiment of the method for verifying identity based on physiological feature information of the present application, the method for verifying identity based on the physiological feature information in this embodiment is applied to a server. The method for verifying identity based on physiological feature information includes the following.

At step S60, receive the identity verification request sent by the terminal, and acquire the physiological feature information in the identity verification request.

The server receives the identity verification request sent by the terminal, and the server parses the received identity verification request to acquire the physiological feature information in the identity verification request.

At step S70, acquire historical login device information corresponding to the physiological feature information, and process the historical login device information according to a preset encryption rule to generate the identity verification information.

After acquiring the physiological feature information in the identity verification request, the server looks up the historical login device information corresponding to the physiological feature information, and processes the historical login device information according to the preset encryption rule to generate the identity verification information. Specifically, it includes:

at step a2, the server comparing the physiological feature information with each of the feature data in the preset verification database (the preset verification database refers to a database preset in the server for associating the user feature data with the data from the user terminal);

at step b2, acquiring the historical login device information associated with the target feature data if there is the target feature data matching the physiological feature information in the preset verification database, and processing the historical login device information according to the preset encryption rule to generate the identity verification information, where the preset encryption rule refers to a encryption rule arranged in advance;

at step c2, sending a prompt message indicating that the verification has failed to the terminal if there is no target feature data matching the physiological feature information in the preset verification database, so that the user of the terminal can view the verification result.

It needs to be added that, in order to avoid situations that there is an error in machine recognition, the user may manually set additional information for comparison. For example, the existing voice comparison and recognition mainly identify voiceprint features, and the user may set fixed voice information, or voice emotions.

At step S80, send the identity verification information to the terminal, so that the terminal performs identity verification according to the identity verification information.

The server sends the identity verification information to the terminal, so that the terminal performs identity verification according to the identity verification information.

In this embodiment, the server receives the identity verification information sent by the terminal, the server determines the historical device information according to the physiological feature information in the identity verification information, and returns the historical device information to the terminal so that the terminal may perform identity verification based on the historical device information.

Moreover, referring to FIG. 4, the present application also proposes an embodiment of a device for verifying identity based on physiological feature information. The device for verifying identity based on physiological feature information is arranged in a terminal, and the device for verifying identity based on the physiological feature information includes:

a receiving and collecting module 10, configured to receive an operating instruction triggered by a user, and collect physiological feature information of the user through a preset physiological feature device;
a generating and sending module 20, configured to generate an identity verification request including the physiological feature information, and send the identity verification request to a server, so that the server feeds back the identity verification information;
a receiving and acquiring module 30, configured to receive the identity verification information sent by the server, and acquire historical verification device information in the identity verification information;
an information comparison module 40, configured to compare the historical verification device information with device identification information of the terminal;
a verification execution module 50, configured to pass through the identity verification and execute the operating instruction if the historical verification device information matches the device identification information.

Optionally, the physiological feature information includes a face image; and the generating and sending module 20 includes:

an image recognition unit, configured to input the face image to a preset image recognizer and acquire face recognition data corresponding to the face image;
an information comparison unit, configured to input the face recognition data into a preset comparison model, and determine whether there is target feature data matching the face recognition data in the preset image database;
here the preset comparison model is:

$$d_{12} = \sqrt{\sum_{k=1}^{n}(x_{1k} - x_{2k})^2},$$ where $d_{12}$ refers

to an Euclidean distance between the face recognition data and the pre-stored feature data, the face recognition data corresponds to an n-dimensional vector $\mathbf{a}(x_{11}, x_{12},..., x_{1n})$, $x_{1k}$ refers to a value in the n-dimensional vector $\mathbf{a}$, and the pre-stored feature data in the preset image database corresponds to n-dimensional vectors $\mathbf{b1}(x_{21}, x_{22}, ..., x_{2n})$, $\mathbf{b2}(x2i, x_{22}, ..., x_{2n})$, ..., $\mathbf{bn}(x_{21}, x_{22}, ..., x_{2n})$, and $x_{2k}$ refers to one value of any one of the n-dimensional vectors $\mathbf{b1}$, $\mathbf{b2}$, ..., $\mathbf{bn}$;
a verification generating unit, configured to, if there is the target feature data matching the face recognition data in the preset image database, pass through initial identity verification and generate the identity verification request containing the face recognition data;
an information sending unit, configured to send the identity verification request to the server, so that the server feeds back the identity verification information.

Optionally, the receiving and acquiring module 30 includes:

a receiving and determining unit, configured to receive the identity verification information sent by the server, and determine whether the identity verification information is encrypted;
a decryption and acquisition unit, configured to, if the identity verification information has been encrypted, process the identity verification information according to a preset decryption rule and acquire historical verification device information in the identity verification information.

In addition, referring to FIG. 5, the present application also proposes another embodiment of the device for verifying identity based on the physiological feature information. The device for verifying identity based on the physiological feature information includes:

a receiving module 60, configured to receive the identity verification request sent by the terminal and acquire the physiological feature information in the identity verification request;
an acquisition module 70, configured to acquire the historical login device information corresponding to the physiological feature information and process the historical login device information according to the preset encryption rule to generate the identity verification information;
a sending module 80, configured to send the identity verification information to the terminal, so that the terminal performs identity verification according to the identity verification information.

Optionally, the acquisition module 70 includes:

a comparison unit, configured to compare the physiological feature information with each of feature data in the preset verification database;
an information acquisition unit, configured to acquire the historical login device information associated with the target feature data if there is the target feature data matching the physiological feature information in the preset verification database;
an encryption generating unit, configured to process the historical login device information according to the preset encryption rule to generate the identity verification information.

Optionally, the acquisition module 70 includes:
a prompt unit, configured to send a prompt message indicating that the verification fails to the terminal if there is no target feature data matching the physiological feature information in the preset verification database, to enable the user of the terminal to view the verification result.
The steps implemented by each functional module of the device for verifying identity based on the physiological feature information may refer to the various embodiments of the methods for verifying identity based on the physiological feature information of the present application, which will not be repeated herein.

Moreover, the embodiment of the present application also proposes a computer storage medium.

A computer-readable instruction is stored in the computer storage medium, and when the computer-readable instruction is executed by a processor, the computer-readable instruction implements operations in the method for verifying identity based on the physiological feature information provided in the above embodiments.

The above description only describes preferred embodiments of the present application, and does not limit the scope of the present application. Any equivalent structure or equivalent process transformation made using the content of the description and drawings of the present application, or directly or indirectly applied to other related technical fields, should be similarly included in the scope of patent protection of the present application.

## Claims

1. A method for verifying identity based on physiological feature information, **characterized in that**, the method for verifying identity based on the physiological feature information is applied to a terminal;
the method for verifying identity based on the physiological feature information comprises the following steps of:

   receiving an operating instruction triggered by a user, and collecting the physiological feature information of the user through a preset physiological feature device;
   generating an identity verification request containing the physiological feature information, and sending the identity verification request to a server, so that the server feeds back the identity verification information;
   receiving the identity verification information sent by the server, and acquiring historical verification device information in the identity verification information;
   comparing the historical verification device information with device identification information of the terminal;
   if the historical verification device information matches the device identification information, passing through identity verification and executing the operating instruction.

2. The method for verifying identity according to claim 1, **characterized in that**, the physiological feature information comprises a facial image;
the step of generating the identity verification request containing the physiological feature information and sending the identity verification request to the server so that the server feeds back the identity verification information comprises:

   inputting the face image to a preset image recognizer, and acquiring face recognition data corresponding to the face image;
   inputting the face recognition data into a preset comparison model, and determining whether there is target feature data matching the face recognition data in the preset image database; wherein the preset comparison model is:

   $$d_{12} = \sqrt{\sum_{k=1}^{n}(x_{1k} - x_{2k})^2},$$ where $d_{12}$

   refers to an Euclidean distance between the face recognition data and the pre-stored feature data, the face recognition data corresponds to an n-dimensional vector $\mathbf{a}(x_{11}, x_{12}, ..., x_{1n})$, $x_{1k}$ refers to one value in the n-dimensional vector $\mathbf{a}$, the pre-stored feature data in the preset image database corresponds to n-dimensional vectors $\mathbf{b1}(x_{21}, x_{22}, ..., x_{2n})$, $\mathbf{b2}(x2i, x_{22}, ..., x_{2n})$, ..., $\mathbf{bn}(x_{21}, x_{22}, ..., x_{2n})$, and $x_{2k}$ refers to one value of any one of the n-dimensional vectors $\mathbf{b1}$, $\mathbf{b2}$, ..., $\mathbf{bn}$;
   if there is the target feature data matching the face recognition data in the preset image database, passing through initial identity verification and generating the identity verification request containing the face recognition data;
   sending the identity verification request to the server, so that the server feeds back the identity verification information.

3. The method for verifying identity according to claim 1, **characterized in that**, the step of receiving the identity verification information sent by the server and acquiring the historical verification device information in the identity verification information comprises:

   receiving the identity verification information sent by the server, and determining whether the identity verification information is encrypted;
   if the identity verification information has been encrypted, processing the identity verification information according to a preset decryption rule, and acquiring the historical verification device information in the identity verification information.

4. A method for verifying identity based on physiological feature information, **characterized in that**, the method for verifying identity based on the physiological feature information is applied to a server;
the method for verifying identity based on the physiological feature information comprises the following steps of:

receiving an identity verification request sent by a terminal, and acquiring the physiological feature information in the identity verification request;

acquiring historical login device information corresponding to the physiological feature information, and processing the historical login device information according to a preset encryption rule to generate the identity verification information;

sending the identity verification information to the terminal, so that the terminal performs identity verification according to the identity verification information.

5. The method for verifying identity according to claim 4, **characterized in that**, the step of acquiring the historical login device information corresponding to the physiological feature information and processing the historical login device information according to the preset encryption rule to generate the identity verification information comprises:

comparing the physiological feature information with each of feature data in a preset verification database;

acquiring the historical login device information associated with target feature data if there is the target feature data matching the physiological feature information in the preset verification database;

processing the historical login device information according to the preset encryption rule to generate the identity verification information.

6. The method for verifying identity according to claim 5, **characterized in that**, after the step of comparing the physiological feature information with each of the feature data in the preset verification database, the method further comprises:

if there is no target feature data matching the physiological feature information in the preset verification database, sending a prompt message indicating that the verification fails to the terminal to enable a user of the terminal to view a verification result.

7. A system for verifying identity based on physiological feature information, **characterized in that**, the system for verifying identity based on the physiological feature information comprises a terminal and a server in communication connection with each other;

the terminal comprises a first memory, a first processor, and a computer-readable instruction stored in the first memory and executable in the first processor, wherein,

the first processor is configured to:

receive an operating instruction triggered by a user, and collect the physiological feature information of the user through a preset physiological feature device;

generate an identity verification request containing the physiological feature information, and send the identity verification request to the server, so that the server feeds back the identity verification information;

receive the identity verification information sent by the server, and acquire historical verification device information in the identity verification information;

the first processor is further configured to:

compare the historical verification device information with device identification information of the terminal;

if the historical verification device information matches the device identification information, pass through identity verification and execute the operating instruction;

the server comprises a second memory, a second processor, and a computer-readable instruction stored in the second memory and executable in the second processor, wherein,

the second processor is configured to:

receive the identity verification request sent by the terminal, and acquire the physiological feature information in the identity verification request;

acquire historical login device information corresponding to the physiological feature information, and process the historical login device information according to a preset encryption rule to generate the identity verification information;

send the identity verification information to the terminal, so that the terminal performs the identity verification according to the identity verification information.

8. The system for verifying identity according to claim 7, **characterized in that**, when executing the step of receiving the identity verification information sent by the server and acquiring the historical verification device information in the identity verification information, the computer-readable instruction executed in the first processor comprises:

receiving the identity verification information sent by the server, and determining whether the identity verification information is encrypted;

if the identity verification information has been encrypted, processing the identity verification information according to a preset decryption rule, and acquiring the historical verification device information in the identity verification information.

9. A device for verifying identity based on physiological feature information, **characterized in that**, the device for verifying identity based on the physiological feature information is arranged in a terminal;
the device for verifying identity based on the physiological feature information comprises:

a receiving and collecting module, configured to receive an operating instruction triggered by a user, and collect the physiological feature information of the user through a preset physiological feature device;
a generating and sending module, configured to generate an identity verification request containing the physiological feature information, and send the identity verification request to a server, so that the server feeds back the identity verification information;
a receiving and acquiring module, configured to receive the identity verification information sent by the server, and acquire historical verification device information in the identity verification information;
an information comparison module, configured to compare the historical verification device information with device identification information of the terminal;
a verification execution module, configured to, if the historical verification device information matches the device identification information, pass through identity verification and execute the operating instruction.

10. The device for verifying identity according to claim 9, **characterized in that**, the physiological feature information comprises a face image; and the generating and sending module comprises:

an image recognition unit, configured to input the face image to a preset image recognizer and acquire face recognition data corresponding to the face image;
an information comparison unit, configured to input the face recognition data into a preset comparison model, and determine whether there is target feature data matching the face recognition data in the preset image database;
wherein the preset comparison model is:

$$d_{12} = \sqrt{\sum_{k=1}^{n}(x_{1k} - x_{2k})^2},$$ where $d_{12}$

refers to an Euclidean distance between the face recognition data and the pre-stored feature data, the face recognition data corresponds to an n-dimensional vector $\mathbf{a}(x_{11}, x_{12},..., x_{1n})$, $x_{1k}$ refers to one value in the n-dimensional vector $\mathbf{a}$, the pre-stored feature data in the preset image database corresponds to n-dimensional vectors $\mathbf{b1}(x_{21}, x_{22}, ..., x_{2n})$, $\mathbf{b2}(x_{21}, x_{22}, ..., x_{2n})$, ..., $\mathbf{bn}(x_{21}, x_{22}, ..., x_{2n})$, and $x_{2k}$ refers to one value of any one of the n-dimensional vectors $\mathbf{b1}$, $\mathbf{b2}$, ..., $\mathbf{bn}$;
a verification generating unit, configured to, if there is the target feature data matching the face recognition data in the preset image database, pass through initial identity verification and generate the identity verification request containing the face recognition data;
an information sending unit, configured to send the identity verification request to the server, so that the server feeds back the identity verification information.

11. The device for verifying identity according to claim 9, **characterized in that**, the receiving and acquiring module comprises:

a receiving and determining unit, configured to receive the identity verification information sent by the server, and determine whether the identity verification information is encrypted;
a decryption and acquisition unit, configured to, if the identity verification information has been encrypted, process the identity verification information according to a preset decryption rule and acquire historical verification device information in the identity verification information.

12. A device for verifying identity based on physiological feature information, **characterized in that**, the device for verifying identity based on the physiological feature information is arranged in a server;
the device for verifying identity based on the physiological feature information comprises:

a receiving module, configured to receive an identity verification request sent by a terminal, and acquire the physiological feature information in the identity verification request;
an acquisition module, configured to acquire historical login device information corresponding to the physiological feature information, and process the historical login device information according to a preset encryption rule to generate the identity verification information;
a sending module, configured to send the identity verification information to the terminal, so that the terminal performs identity verification according to the identity verification information.

13. The device for verifying identity according to claim 12, **characterized in that**, the acquisition module comprises:

a comparison unit, configured to compare the physiological feature information with each of feature data in a preset verification database;
an information acquisition unit, configured to acquire historical login device information associated with target feature data if there is the target feature data matching the physiological feature information in the preset verification database;
an encryption generating unit, configured to process the historical login device information according to a preset encryption rule to generate the identity verification information.

14. The device for verifying identity according to claim 13, **characterized in that**, the acquisition module further comprises:
a prompt unit, configured to send a prompt message indicating that the verification fails to the terminal if there is no target feature data matching the physiological feature information in the preset verification database to enable a user of the terminal to view a verification result.

15. A computer storage medium, **characterized in that**, the computer storage medium is arranged in a terminal, a computer-readable instruction is stored in the computer storage medium, and the computer-readable instruction, when executed by a processor, implements the following steps of:

receiving an operating instruction triggered by a user, and collecting the physiological feature information of the user through a preset physiological feature device;
generating an identity verification request containing the physiological feature information, and sending the identity verification request to a server, so that the server feeds back the identity verification information;
receiving the identity verification information sent by the server, and acquiring historical verification device information in the identity verification information;
comparing the historical verification device information with device identification information of the terminal;
if the historical verification device information matches the device identification information, passing through identity verification and executing the operating instruction.

16. The computer storage medium according to claim 15, **characterized in that**, the physiological feature information comprises a facial image;
when the computer-readable instruction is executed by the processor, the step of generating the identity verification request containing the physiological feature information and sending the identity verification request to the server so that the server feeds back the identity verification information comprises:

inputting the face image to a preset image recognizer, and acquiring face recognition data corresponding to the face image;
inputting the face recognition data into a preset comparison model, and determining whether there is target feature data matching the face recognition data in the preset image database;
wherein the preset comparison model is:

$$d_{12} = \sqrt{\sum_{k=1}^{n}(x_{1k} - x_{2k})^2},$$

where $d_{12}$ refers to an Euclidean distance between the face recognition data and the pre-stored feature data, the face recognition data corresponds to an n-dimensional vector $\mathbf{a}(x_{11}, x_{12},..., x_{1n})$, $x_{1k}$ refers to one value in the n-dimensional vector $\mathbf{a}$, the pre-stored feature data in the preset image database corresponds to n-dimensional vectors $\mathbf{b1}(x_{21}, x_{22}, ..., x_{2n})$, $\mathbf{b2}(x_{21}, x_{22}, ..., x_{2n})$, ..., $\mathbf{bn}(x_{21}, x_{22}, ..., x_{2n})$, and $x_{2k}$ refers to one value of any one of the n-dimensional vectors $\mathbf{b1}$, $\mathbf{b2}$, ..., $\mathbf{bn}$;
if there is the target feature data matching the face recognition data in the preset image database, passing through initial identity verification and generating the identity verification request containing the face recognition data;
sending the identity verification request to the server, so that the server feeds back the identity verification information.

17. The computer storage medium according to claim 15, **characterized in that**, when the computer-readable instruction is executed by the processor, the step of receiving the identity verification information sent by the server and acquiring the historical verification device information in the identity verification information comprises:

receiving the identity verification information sent by the server, and determining whether the identity verification information is encrypted;
if the identity verification information has been encrypted, processing the identity verification information according to a preset decryption rule, and acquiring the historical verification device information in the identity verification information.

18. A computer storage medium, **characterized in that**, the computer storage medium is arranged in a server, a computer-readable instruction is stored in the computer storage medium, and the computer-readable instruction, when executed by a processor, implements the following steps of:

receiving an identity verification request sent by a terminal, and acquiring the physiological feature information in the identity verification request;

acquiring historical login device information corresponding to the physiological feature information, and processing the historical login device information according to a preset encryption rule to generate the identity verification information;

sending the identity verification information to the terminal, so that the terminal performs identity verification according to the identity verification information.

19. The computer storage medium according to claim 18, **characterized in that**, when the computer-readable instruction is executed by the processor, the step of acquiring the historical login device information corresponding to the physiological feature information and processing the historical login device information according to the preset encryption rule to generate the identity verification information comprises:

comparing the physiological feature information with each of feature data in a preset verification database;

acquiring the historical login device information associated with target feature data if there is the target feature data matching the physiological feature information in the preset verification database;

processing the historical login device information according to the preset encryption rule to generate the identity verification information.

20. The computer storage medium according to claim 19, **characterized in that**, when the computer-readable instruction is executed by the processor, after the step of comparing the physiological feature information with each of the feature data in the preset verification database, the step further comprises:

if there is no target feature data matching the physiological feature information in the preset verification database, sending a prompt message indicating that the verification fails to the terminal to enable a user of the terminal to view a verification result.

1005

1001

processor

1002

operating system

network communication module

user interface module

1003          1004

computer-readable instruction

user interface

network interface

memory

FIG. 1

receiving an operating instruction triggered by a user, and collecting the physiological feature information of the user through a preset physiological feature device

S10

generating an identity verification request containing the physiological feature information, and sending the identity verification request to a server, so that the server feeds back the identity verification information

S20

receiving the identity verification information sent by the server, and acquiring historical verification device information in the identity verification information

S30

comparing the historical verification device information with device identification information of the terminal

S40

if the historical verification device information matches the device identification information, passing through identity verification and executing the operating instruction

S50

FIG. 2

| receiving an identity verification request sent by a terminal, and acquiring the physiological feature information in the identity verification request | S60 |

| acquiring historical login device information corresponding to the physiological feature information, and processing the historical login device information according to a preset encryption rule to generate the identity verification information | S70 |

| sending the identity verification information to the terminal, so that the terminal performs identity verification according to the identity verification information | S80 |

FIG. 3

device for verifying identity based on the physiological feature information

| receiving and collecting module | 10 |
| generating and sending module | 20 |
| receiving and acquiring module | 30 |
| information comparison module | 40 |
| verification execution module | 50 |

FIG. 4

device for verifying identity based on physiological feature information

| receiving module | 60 |
| acquisition module | 70 |
| sending module | 80 |

FIG. 5

## INTERNATIONAL SEARCH REPORT

| International application No. |
| --- |
| **PCT/CN2018/122621** |

### A. CLASSIFICATION OF SUBJECT MATTER

G06F 21/32(2013.01)i

According to International Patent Classification (IPC) or to both national classification and IPC

### B. FIELDS SEARCHED

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, EPODOC, WPI, CNKI, IEEE: 生物, 生理, 特征, 人脸, 图像, 指纹, 验证, 认证, 服务器, 历史, 信息, 匹配, 识别, biological, character, face, image, fingerprint, validate, authentication, server, history, information, match, identify

### C. DOCUMENTS CONSIDERED TO BE RELEVANT

| Category* | Citation of document, with indication, where appropriate, of the relevant passages | Relevant to claim No. |
| --- | --- | --- |
| A | CN 106101136 A (FEITIAN TECHNOLOGIES CO., LTD.) 09 November 2016 (2016-11-09) description, paragraphs [0006]-[0090] | 1-20 |
| A | CN 102646190 A (TENCENT TECHNOLOGY (SHENZHEN) CO., LTD.) 22 August 2012 (2012-08-22) entire document | 1-20 |
| A | CN 104537746 A (BEIJING XIAOMI TECHNOLOGY CO., LTD.) 22 April 2015 (2015-04-22) entire document | 1-20 |
| A | CN 105243740 A (SICHUAN YIBIAN INFORMATION TECHNOLOGY CO., LTD.) 13 January 2016 (2016-01-13) entire document | 1-20 |
| A | US 2017295175 A1 (TENCENT TECHNOLOGY (SHENZHEN) COMPANY LIMITED) 12 October 2017 (2017-10-12) entire document | 1-20 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **05 May 2019** | **30 May 2019** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2018/122621**

| Patent document cited in search report | | | Publication date (day/month/year) | Patent family member(s) | | | Publication date (day/month/year) |
|---|---|---|---|---|---|---|---|
| CN | 106101136 | A | 09 November 2016 | None | | | |
| CN | 102646190 | A | 22 August 2012 | US | 2015007295 | A1 | 01 January 2015 |
| | | | | KR | 20140138991 | A | 04 December 2014 |
| | | | | WO | 2013139221 | A1 | 26 September 2013 |
| | | | | RU | 2014141345 | A | 10 May 2016 |
| | | | | US | 2019012450 | A1 | 10 January 2019 |
| CN | 104537746 | A | 22 April 2015 | None | | | |
| CN | 105243740 | A | 13 January 2016 | None | | | |
| US | 2017295175 | A1 | 12 October 2017 | CN | 106161392 | A | 23 November 2016 |
| | | | | WO | 2016165536 | A1 | 20 October 2016 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201811023997